# EUROPÄISCHE PATENTANMELDUNG

(11) **EP 1 657 425 A2**
(43) Veröffentlichungstag der Anmeldung: **17.05.2006**
(21) Anmeldenummer: 05105815.4
(22) Anmeldetag: 29.06.2005
(51) Int. Cl.: F02M 31/125

(54) **Widerstandsheizung**

(30) Priorität: 11.11.2004 DE 102004054625
(71) Anmelder: MANN+HUMMEL GmbH, 71638 Ludwigsburg (DE)
(72) Erfinder: Haubold, Thomas, 71672, Marbach (DE); Herrmann, Ralf, 74343, Sachsenheim (DE)

(57) **Zusammenfassung**

Die Erfindung betrifft eine Widerstandsheizung 10 für ein Flüssigkeitssystem, insbesondere ein Kraftstoffsystem, in dem ein Heizelement 13 mit mindestens zwei Kontaktstäben 12a, 12b verbunden ist. An den Kontaktstäben 12a, 12b sind Anschlüsse vorgesehen, wodurch diese mit einer elektrischen Spannung beaufschlagt werden können. Weiterhin ist ein Sensor 24 vorgesehen, mit welchem mindestens ein Parameter in dem Flüssigkeitssystem erfassbar ist, wobei der Sensor 24 mit mindestens einer Auswerteeinheit 18 korrespondierend verbunden ist.

## Beschreibung

### Stand der Technik

Die Erfindung betrifft eine Widerstandsheizung für ein Flüssigkeitssystem nach dem Oberbegriff des Patentanspruches 1. Außerdem betrifft die Erfindung ein Flüssigkeitssystem gemäß Anspruch 8, sowie ein Verfahren zur Erfassung des Flüssigkeitspegels gemäß Anspruch 9 und ein Verfahren zur Erfassung der Flüssigkeitstemperatur gemäß Anspruch 10.

Flüssigkeitssysteme, die freien Umgebungsbedingungen ausgesetzt sind, unterliegen unter Umständen Temperaturen, die unterhalb des Erstarrungspunktes der verwendeten Flüssigkeiten liegen. Hieraus ergibt sich die Notwendigkeit, Heizelemente in die Flüssigkeitssysteme zu integrieren, welche sich abhängig von den Flüssigkeitstemperaturen und den Umgebungstemperaturen zuschalten.

Aus der DE 102 22 946 ist beispielsweise eine Kunststoffwiderstandsheizung bekannt, bei der zwei nebeneinander angeordnete Kontaktstäbe durch ein Kunststoffwiderstandsmaterial miteinander korrespondieren. Die Kontaktstäbe sind dabei an den Zonen innerhalb des Kraftstoffsystems vollkommen von dem Kunststoffwiderstandsmaterial umspritzt. Nachteilig an dieser Widerstandsheizung ist, dass keine sensorischen Elemente vorgesehen sind, welche das Betreiben der Widerstandsheizung unterstützen. Diese müssen beim autonomen Betreiben der Widerstandsheizung zusätzlich vorgesehen werden, wodurch ein zusätzlicher Einbauraum beansprucht, und ein Mehraufwand an Material, Montage und Logistik entsteht.

Aufgabe der Erfindung ist es eine Widerstandsheizung für Flüssigkeitssysteme zu schaffen, welche die oben genannten Nachteile vermeidet. Diese Aufgabe wird durch die Merkmale der Ansprüche 1, 8, 9 und 10 gelöst.

### Vorteile der Erfindung

Die erfindungsgemäße Widerstandsheizung dient einer definierten Erwärmung einer, in einem Flüssigkeitssystem enthaltenen Flüssigkeit, wobei die Flüssigkeit z. B. Kraftstoff, Öl, Wasser oder ein beliebiges Flüssigkeitsgemisch sein kann. Die Flüssigkeit kann durch das Flüssigkeitssystem strömen oder darin bevorratet sein. In dem Flüssigkeitssystem können noch weitere Mittel zur Behandlung der Flüssigkeit angeordnet sein. Diese Mittel können beispielsweise Kühler oder Filter sein. Die Widerstandsheizung verfügt über mindestens zwei Kontaktstäbe, welche Anschlusskontakte aufweisen, wobei durch die Anschlusskontakte eine elektrische Spannung an die Kontaktstäbe anlegbar ist. Die Kontaktstäbe sind voneinander beabstandet und werden durch wenigstens ein mit den Kontaktstäben in Kontakt stehendes Heizelement verbunden. Durch das Anlegen einer elektrischen Spannung an die Anschlusskontakte fließt ein elektrischer Strom über die Kontaktstäbe und das Heizelement, wodurch sich dieses erwärmt. Der Wärmeübergang zu der Flüssigkeit findet durch die Heizelemente statt. Erhitzt werden können z. B. alle Arten von Kraftstoffen, insbesondere Diesel, Öle, Kühlflüssigkeiten oder Reinigungsflüssigkeiten. Zur Gewährleistung der Funktion müssen die Kontaktstäbe eine gute Wärmeleitfähigkeit und eine hohe elektrische Leitfähigkeit aufweisen. Die Form der Kontaktstäbe kann dabei rund, plattenförmig oder profiliert, z. B. als Stern oder Polygon ausgebildet sein. Je nach Form des Einbauraumes der Widerstandsheizung kann eine beliebige Anzahl von Kontaktstäben und Heizelementen angeordnet werden, wodurch sich eine großflächige und gleichmäßige Wärmeabgabe an die Flüssigkeit ergibt. Die Widerstandsheizung kann im Einbauraum hängend, stehend oder seitlich liegend angeordnet sein. Die Heizelemente sind aus elektrischem Widerstandsmaterial gebildet. Als Material eignet sich dazu vorzugsweise ein elektrisch leitfähiges Kunststoffmaterial, welches z. B. im Spritzgussverfahren mit den Kontaktstäben verbunden werden kann. Das Widerstandsmaterial ist ein so genannter Heizleiter, der an einer Spannung angelegt, einen niedrigen elektrischen Widerstand aufweist und sich durch den Stromfluss erwärmt. Als Kunststoffwiderstandsmaterial eignet sich auf Grund seiner hohen Temperaturbeständigkeit zum Beispiel ein Polyamid, dem als Füllstoff, Metall-, Kohlefasern, Russpartikel, Graphitpartikel, Graphitpulver oder eine Kombination aus diesen Füllstoffen beigemengt sind.

Als weiteres Funktionselement ist in die Widerstandsheizung ein Sensor integriert, der es ermöglicht, mindestens einen Parameter der Flüssigkeit zu erfassen. Als Sensoren können z. B. Halbleiter zur Temperaturmessung, piezoelektrische Sensoren zur Druckmessung, optoelektrische Sensoren zur Dichtemessung, Sensoren zur Messung der Kapazität, wie auch alle anderen aus dem Stand der Technik bekannten Sensoren angeordnet werden. Die von den Sensoren erfassten Werte werden von einer Auswerteeinheit erfasst und verarbeitet. Die dadurch gewonnenen Daten ermöglichen es auf veränderte Parameter zu reagieren und über Regelsignale Aktoren zu betätigen. So kann z. B. beim Unterschreiten einer Solltemperatur die Widerstandsheizung aktiviert, beim Unterschreiten eines Solldruckes eine Pumpe eingeschaltet, oder beim Abweichen einer Solldichte eine Warnmeldung veranlasst werden. Die Auswerteeinheit kann dabei Regelsignale direkt an die entsprechenden Aktoren weitergeben oder die verarbeiteten Daten einer weiteren elektronischen Einheit zur Verfügung stellen. Grundsätzlich können die Sensoren auch mit mehreren Auswerteeinheiten korrespondieren und die gewonnenen Daten können, insbesondere auch Verschleiß- und Wartungsrelevante Informationen bereitstellen. Die erfindungsgemäße Widerstandsheizung ermöglicht es in vorteilhafter Weise, zusätzliche Funktionen in ein Bauteil zu integrieren und dadurch einzelne Funktionselemente mehrfach zu nutzen, wodurch sich eine Reduzierung von Einbauraum, Material und Fertigungsaufwand erreichen lässt.

Gemäß einer positiven Ausführung der Erfindung weist das Heizelement hydrophobe und/oder oliophobe Oberflächeneigenschaften auf. Diese Oberflächeneigenschaft wird durch eine Beschichtung des Bauteils erzeugt. Das zur Beschichtung verwendete Material ist vorzugsweise aus einer anorganischen, nichtmetallischen, insbesondere silikatischen Basis gebildet. Die Beschichtung ist derartig dichtend ausgestaltet, dass ein Eindringen des Fluids in die Beschichtung oder ein Anhaften an der Beschichtung verhindert wird. Fluide könne dabei flüssige oder gasförmige Medien sein. Die Beschichtung wird vorzugsweise im Tauchbad aufgebracht, kann aber beispielsweise auch aufgesprüht werden. Die Aushärtung der Beschichtung erfolgt durch Temperatureinfluss. Dazu kann die Oberfläche beispielsweise durch Strahlungswärme oder durch Wärmekonvektion erhitzt werden.

Die, an der Oberfläche des Heizelementes vorhanden Poren, werden durch die Beschichtung in vorteilhafter Weise versiegelt. Diese Beschichtung wird mit einem minimalen Materialauftrag erreicht, wodurch keine Beeinträchtigung der Wärmeübertragung zwischen Heizelement und Flüssigkeit entsteht. Dagegen wird durch die wasserabweisende Wirkung eine elektrolytische Zersetzung des Heizelementes verhindert.

In einer vorteilhaften Ausgestaltung ist der Sensor als ein Temperatursensor ausgebildet. Der Temperatursensor ist dabei ein wärmesensitiver Sensor, der aufgrund der ihn umgebenden Temperatur in Verbindung mit der korrespondierenden Auswerteeinheit einen Temperaturwert ermittelt. Als Sensor zur Verfügung stehen z. B. handelsübliche Halbleiter die einen negativen Temperaturkoeffizienten (NTC) oder einen positiven Temperaturkoeffizienten (PTC) aufweisen. Diese werden üblicher Weise durch ein Eisen- Konstantan, ein NiCr-Ni, oder ein Cu-Konstantan Element gebildet wird. Der Temperatursensor ist ein Teil der Widerstandsheizung und kann am Heizelement angeordnet werden. Der Temperatursensor erfasst somit die Temperatur des Heizelementes bei bekannten Umgebungsbedingungen und damit indirekt die Temperatur der Flüssigkeit. Der Temperatursensor kann auch außerhalb des Flüssigkeitssystems, an den Anschlusskontakten des Heizelementes angeordnet sein. Durch den, mit dem in der Widerstandsheizung integrierten Temperatursensor wird die Abstimmung der Regelung des Heizelementes auf die Flüssigkeitstemperaturen vorteilhaft erleichtert.

Eine weitere vorteilhafte Ausgestaltung ist die Anbringung des Temperatursensors direkt an einem Kontaktstab. Der Temperatursensor ist dabei direkt und thermisch leitend mit dem Kontaktstab verbunden und erfasst somit die Wärme des Kontaktstabes. Dazu kann der Temperatursensor auf den Kontaktstab z. B. aufgeklebt, aufgelötet oder gemeinsam mit dem Kontaktstab eingegossen sein. Diese thermisch leitende Verbindung kann innerhalb des Flüssigkeitssystems oder außerhalb beziehungsweise an der Auswerteeinheit positioniert sein. Zu beachten ist dabei, dass keine weiteren wärmeerzeugenden Bauteile in der unmittelbaren Umgebung des Temperatursensors positioniert sind, oder dass der Temperatursensor von weiteren Wärmequellen abgeschirmt oder thermisch abgekoppelt ist. Aufgrund der guten Wärmeleitfähigkeit des Kontaktstabes wird ein kleiner Teil der Wärmemenge des Heizelementes auf den Temperatursensor übertragen. Bei konstanter Heizleistung, konstanter Wärmekapazität der Flüssigkeit und konstantem Volumenstrom ändert sich die Temperaturdifferenz zwischen Flüssigkeit und Kontaktstab annähernd proportional zur Heizleistung. In der Auswerteeinheit wird das Signal des Temperatursensors mit der Heizleistung verknüpft, wodurch die Flüssigkeitstemperatur ermittelbar ist. Für die Bestimmung einer Ein- und Ausschaltschwelle des Heizelementes in einer Kraftstoffheizung können geringe Schwankungen der Einflussparameter hingenommen werden, sind jedoch genauere Messwerte verlangt, so müssen die Einflussparameter erfasst und von der Auswerteeinheit berücksichtigt werden. Durch die Erfassung der Flüssigkeitstemperatur über den Kontaktstab ergibt sich der Vorteil einer raumsparenden und montagefreundlichen Anordnung. Sobald das Heizelement, beispielsweise in einem Fehlerfall, eine kritische Temperatur überschritten hat, kann die Auswerteeinheit die Abschaltung veranlassen, wodurch eine Überhitzung der Widerstandsheizung verhindert wird.

Gemäß einer weiteren Ausgestaltung ist ein Schalttransistor direkt mit einem der Kontaktstäbe verbunden. Die im Schalttransistor entstehende Wärme muss abgeführt werden. Die thermisch leitfähige Verbindung zwischen Schalttransistor und Kontaktstab sollte dabei möglichst direkt und großflächig sein. Die Verbindung kann z. B. eine Klebe-, Löt-oder Steckverbindung sein, wobei auch ein Eingießen des Schalttransistors möglich ist.

Um eine Überhitzung des Heizelementes z. B. beim Defekt des Transistors zu verhindern, kann zwischen dem Schalttransistor und den Kontaktstäben eine Schmelzsicherung angebracht werden, welche einen tiefen Schmelzpunkt aufweist. Der Schmelzpunkt liegt unterhalb einer thermischen Beschädigungsgrenze des Heizelementes bzw. der Entzündungstemperatur der Flüssigkeit. Durch eine Temperaturüberschreitung des Schmelzpunktes unterbricht die Schmelzsicherung den Stromfluss. Der Vorteil liegt im Nutzen der Wärmeleitfähigkeit der Kontaktstäbe, über welche die Abwärme des Schalttransistors abgeleitet wird. Dadurch kann auf zusätzliche Temperaturfühler zur Überwachung der Transistortemperatur und auf externe Kühlkörper verzichtet werden.

In einer vorteilhaften Ausgestaltung der Erfindung ist der Sensor ein Füllstandssensor, welcher mit der Auswerteeinheit korrespondiert. Der Sensor kann unter Umständen ein zusätzlicher Sensor sein, wenn die Widerstandsheizung bereits über einen Temperatursensor verfügt. Der Füllstandssensor kann z. B. einen maximalen oder einen minimalen Wert eines Flüssigkeitspegels oder auch den Pegelstand einer Flüssigkeit in einem Behälter erfassen. Sind in einem Behälter zwei Flüssigkeiten mit unterschiedlicher Dichte vorhanden, so setzt sich die Flüssigkeit mit der größeren Dichte im tiefliegenden Bereich des Behälters ab. Der Pegelstand kann dabei auch die horizontale Trennlinie zwischen den Flüssigkeiten sein.

Als Sensoren eignen sich z. B. Schwimmersensoren, bei denen ein Schwimmerelement in der Flüssigkeit, auf dem Höhenniveau des Pegelstandes schwimmt und dabei über Reedkontakte oder Potentiometer Signale an die Auswerteeinheit liefert. Weiterhin können z. B. Ultraschallsensoren die Füllstandshöhe erfassen. Vorteilhaft bei der, in der Widerstandsheizung integrierten Füllstandsmessung ist die Zusammenfassung mehrerer Funktionen in einem Bauteil. Dadurch lassen sich Montage-, und Logistikaufwand, sowie der erforderliche Einbauraum reduzieren.

Gemäß einer weiteren vorteilhaften Ausgestaltung der Erfindung, ist der Füllstandssensor ein Sensor, der auf dem Prinzip der Kapazitätsmessung beruht. Die Flüssigkeit kann aus zwei unterschiedlichen Flüssigkeiten bestehen, wobei eine Flüssigkeit elektrisch leitend ist und die andere Flüssigkeit, welche beispielsweise Dieselkraftstoff ist, isolierende Eigenschaften aufweist. Das Prinzip der kapazitiven Messung beruht darauf, dass zwischen zwei Elektroden ein Spannungspotential angelegt wird, wobei zwischen den Elektroden eine elektrisch isolierende Schicht angeordnet ist. Die erste Elektrode bildet dabei die Flüssigkeit, welche elektrisch leitend ist, und die zweite Elektrode kann z. B. am Heizelement, an einem Gehäuse oder über einen Adapter befestigt werden, oder das Gehäuse selbst sein. Die elektrisch isolierende Schicht dient als Dielektrikum und die an dieser Fläche anliegende Flüssigkeit als kapazitiver Gegenpol. Um die Kapazität zu messen, wird die elektrische Spannung als Wechselspannung oder Impulsspannung angelegt. Der Lade- und Entladestrom wird gemessen und von der Auswerteeinheit ausgewertet. Aufgrund der unterschiedlichen elektrischen Eigenschaften der im Flüssigkeitssystem befindlichen Medien, kann durch die Messung des Spannungsverlaufs der Flüssigkeitspegel ermittelt werden. Die Spannungsimpulse werden von der Auswerteeinheit generiert und können über einen elektrisch leitenden Kontakt an die Flüssigkeit geleitet werden. Dieser elektrische Kontakt kann beispielsweise als metallischer Stift oder als plattenförmiger Kontakt ausgebildet sein. Die elektrischen Eigenschaften von Wasser, gegenüber Kraftstoff, insbesondere Diesel oder Luft unterscheiden sich ausreichend, um aus den gemessenen Kapazitätswerten einen Wert der Füllstandshöhe zu ermitteln. Dabei kann z. B. eine Minimal- oder eine Maximalhöhe und jede dazwischen liegende Füllstandshöhe erfasst werden.

Die Integration des kapazitiven Füllstandsensors in die Widerstandsheizung bietet den Vorteil, bereits vorhandene Elemente wie z. B. eine Auswerteeinheit, ein Adapter zur Befestigung oder elektrischen Kontaktierung zu nutzen und dadurch Material-, Montage- und Logistikkosten zu reduzieren. Gleichzeitig ergibt sich eine günstigere Nutzung des Einbauraumes.

Vorteilhafter Weise ist das Heizelement in einer weiteren Ausführungsform durch eine elektrisch isolierende Schicht umschlossen. Die isolierende Schicht kann aus mehreren Schichten unterschiedlicher Materialien bestehen. Wird das Heizelement als zweite Elektrode und die Flüssigkeit als erste Elektrode genutzt, so kann die isolierende Schicht das zur Kapazitätsmessung notwendige Dielektrikum bilden. Die isolierende Schicht kann aus einem elektrisch nicht leitenden Kunststoff, Lack oder aus einem beliebigen im Stand der Technik bekannten Beschichtungsmaterial gebildet sein, welches den verwendeten Flüssigkeiten und Temperaturen gegenüber widerstandsfähig ist. Die Beschichtung kann dabei durch z. B. Tauchen, Sprühen oder Pulverisieren aufgebracht werden. Zur Verhinderung der Anlagerung von Stoffen, Salzen oder Schmutz aus dem, das Heizelement umgebenden Fluid ist eine Beschichtung aus einer anorganischen, nichtmetallischen, insbesondere silikatischen Basis aufzubringen.

Die isolierende Schicht schützt das Heizelement vorteilhaft vor Korrosion und vor der Zersetzung durch aggressive Medien und Elektrolyse. Das um das Heizelement entstehende Dielektrikum ermöglicht es vorteilhaft, das Heizelement zusätzlich als Elektrode zur Kapazitätsmessung zu nutzen. Der wirtschaftliche Vorteil besteht in der Einsparung einer separaten Kapazitätsfläche, wodurch auch ein erheblicher Material und Raumvorteil entsteht.

Das erfindungsgemäße Flüssigkeitssystem kann zur Bevorratung oder Durchströmung einer Flüssigkeit vorgesehen sein. Bei einer besonderen Ausgestaltung ist das Flüssigkeitssystem ein, vorzugsweise für Dieselkraftstoff, vorgesehenes Kraftstofffiltersystem. Das Flüssigkeitssystem weist ein Gehäuse mit einem Einlass und einem Auslass auf, wobei die Flüssigkeit durch den Einlass in das Flüssigkeitssystem einströmt und durch den Auslass wieder aus dem Flüssigkeitssystem austritt. Das Gehäuse kann z. B. ein Tank, ein Speicherbehälter, ein Filtergehäuse oder ein Abscheidebehälter sein. Im Flüssigkeitssystem ist eine im Vorfeld beschriebene Widerstandsheizung eingebracht. Die Widerstandsheizung ist zwischen Ein- und Auslass angeordnet. Durch die Widerstandsheizung wird z. B. die Paraffinierung von Dieselkraftstoff bei winterlichen Temperaturen verhindert. Das im Dieselkraftstoff enthaltene Wasser setzt sich aufgrund der unterschiedlichen Dichte am Gehäuseboden ab. Hierbei ist eine Überwachung des Pegels zwischen Dieselkraftstoff und Wasser erforderlich.

Zur mechanischen Befestigung und elektrischen Kontaktierung der Widerstandsheizung an dem Gehäuse ist ein Adapter vorgesehen, der als einzelnes einstückiges oder mehrteiliges Bauteil ausgeführt sein kann. Als Adapter kann z. B. auch das Gehäuse selbst oder ein Gehäuseteil dienen, in dem Aussparungen, Rippen, Nasen, Stege oder Bohrungen zum Befestigen der Funktionsteile vorhanden sind. Der Adapter kann innerhalb, au-ßerhalb oder die Gehäusewandung durchdringend angeordnet sein. Gleichzeitig kann der Adapter als Flansch dienen und das Gehäuse verschließen. Es bietet sich an, den Adapter zwischen dem innerhalb des Gehäuses angeordneten Heizelement und der au-ßerhalb des Gehäuses liegenden Auswerteeinheit anzuordnen. Die elektronischen Bauteile der Auswerteeinheit müssen somit nicht eingekapselt werden. Der Adapter trennt somit eine Gehäuseinnenseite von einer Gehäuseaußenseite, wobei die Kontaktstäbe den Adapter durchdringen.

Die Schnittstellen der Funktionselemente des Flüssigkeitssystems werden durch den Adapter vorteilhaft zusammengefasst, wodurch alle beschriebenen Sensoren integrierbar sind und alle Funktionen mit einer minimalen Anzahl an Bauteilen, kostengünstig, montagegünstig und funktionssicher, bei günstigem Raumbedarf verwirklicht werden können.

Die Erfindung ermöglicht ein vorteilhaftes Verfahren zur Überwachung eines Flüssigkeitspegels in dem erfindungsgemäßen Flüssigkeitssystem. Dabei kann die Erfassung des Flüssigkeitspegels von einer Auswerteeinheit oder von einer mit der Auswerteeinheit verbundenen elektronischen Einheit ausgelöst werden. Der Zeitpunkt der Erfassung kann z. B. durch Zeitintervalle, beispielsweise nach einer definierten Betriebsdauer oder durch Umweltbedingungen, beispielsweise in Abhängigkeit von der Außentemperatur beeinflusst werden. Die notwendigen Schritte werden von der Auswerteeinheit nach einem Ablaufschema veranlasst. Dabei werden zunächst Funktionselemente deaktiviert, welche eine Erfassung ausschließen oder erschweren. Ist z. B. das Heizelement im Heizbetrieb, so kann dieses nicht oder nur mit hohem steuerungstechnischen Aufwand gleichzeitig zum Erfassen des Flüssigkeitspegels verwendet werden. Bei betriebsbereitem Sensor wird durch eine, vorzugsweise aus Metall gebildete Kontaktplatte, ein elektrischer Spannungsimpuls an die Flüssigkeit, die als erste Elektrode dient, abgegeben. Die Kontaktplatte ist dabei an einem unterhalb des Heizelementes liegenden Punkt angeordnet. Das Heizelement bzw. der Kontaktstab wird als weitere Elektrode genutzt. Zwischen den Elektroden dient die isolierende Schicht als Dielektrikum, wodurch zwischen den Elektroden eine elektrische Kapazität entsteht. Die Auswerteeinheit erfasst den, durch den Spannungsimpuls entstehenden, Lade- und den Entladestrom und wertet die erfassten Werte aus. Aufgrund der unterschiedlichen Eigenschaften der im Gehäuse vorhandenen Flüssigkeiten stehen die erfassten Daten in einem Zusammenhang zu dem im Gehäuse vorhandenen Flüssigkeitspegel. Der Bezug zur Füllstandshöhe kann z. B. durch einen Algorithmus oder durch einen Vergleich ermittelt werden. Beispielsweise beträgt die Kapazität in einem zu 100 % mit Wasser gefülltem Gehäuse ca. 2 nF und in einem zu 100 % mit Kraftstoff gefülltem Gehäuse weniger als 1 nF, die dazwischenlegenden Kapazitätswerte verhalten sich näherungsweise proportional.

Das Verfahren bietet den Vorteil, die Füllstandsmessung ohne separate Füllstandssensoren durchzuführen und vorhandene Funktionsteile für die Füllstandsmessung zu nutzen. Dadurch kann der Einbauraum und der Montageaufwand reduziert, und die Bauteilanzahl minimiert werden. Somit lässt sich eine sehr kostengünstige Füllstandsmessung realisieren. Da keine mechanischen Bauteile erforderlich sind, erhöht sich auch die Zuverlässigkeit der Sensorik.

Ein weiteres vorteilhaftes, aus der Erfindung hervorgehendes Verfahren betrifft die Erfassung der Flüssigkeitstemperatur innerhalb des Flüssigkeitssystems. Aufgrund der Wärmeleitfähigkeit der Widerstandsheizung und der Kontaktstäbe, besteht ein Verhältnis zwischen der Temperatur an den Kontaktstäben und der Flüssigkeitstemperatur. Die Temperatur eines Heizstabes wird durch einen Temperatursensor erfasst und von der Auswerteeinheit ausgewertet. Die Auswerteeinheit ermittelt die Flüssigkeitstemperatur und kann dazu als Einflussparameter, die Heizleistung des Heizelementes, den Volumenstrom der Flüssigkeit und die Wärmekapazität der Flüssigkeit berücksichtigten. Die Flüssigkeitstemperatur ist dabei in Abhängigkeit von der Heizleistung, bei konstantem Volumenstrom proportional zur Temperatur des Kontaktstabes.

Das Verfahren bietet den Vorteil, dass mit einem Temperatursensor sowohl die Temperatur des Kontaktstiftes als auch die Flüssigkeitstemperatur erfasst werden kann. Durch die gleichzeitige Temperaturüberwachung des Kontaktstiftes, wird auch ein Überhitzen der Heizung, z. B. bei flüssigkeitsleerem Gehäuse verhindert. Dadurch kann ein zusätzlicher Sensor eingespart werden, wodurch eine kostengünstige Ausführung realisierbar ist.

Diese und weitere Merkmale von bevorzugten Weiterbildungen der Erfindung gehen au-ßer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Darstellungen beschrieben. Hierbei zeigt
- Figur 1: eine Widerstandsheizung in einem Gehäuse im Vollschnitt,
- Figur 2: einen Ausschnitt des Randbereiches eines Heizelementes,
- Figur 3: ein Spannungs-Zeit Diagramm und
- Figur 4: ein Temperatur-Zeit Diagramm.

### Beschreibung der Ausführungsbeispiele

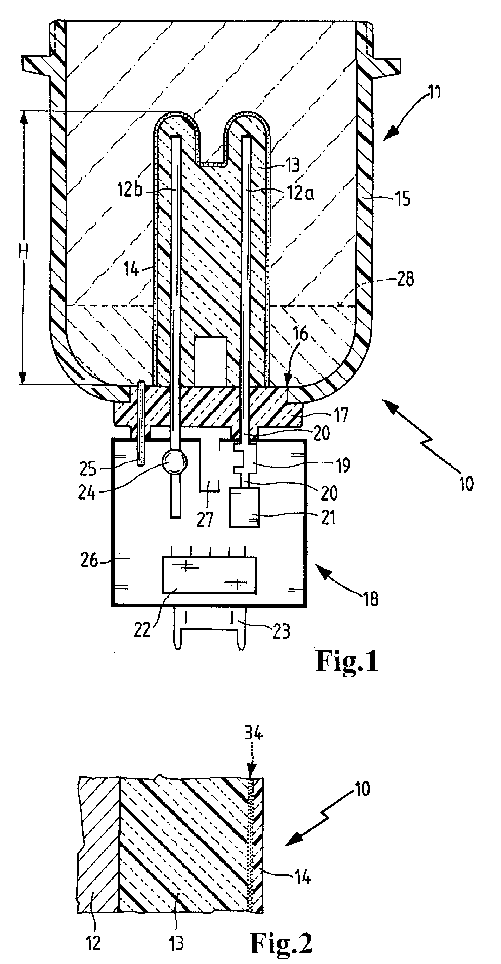

In Figur 1 ist eine Widerstandsheizung 10 dargestellt, welche an einem Gehäuse 11 angeordnet ist. Das Gehäuse 11 kann über einen nicht dargestellten Flansch in ein Kraftstoffsystem integriert werden. Die Widerstandsheizung 10 verfügt über Kontaktstäbe 12a, 12b, welche an ihren Oberflächen direkt von einem Heizelement 13 umschlossen sind. Die Kontaktstäbe 12a, 12b sind aus einem elektrisch und thermisch sehr gut leitfähigen Material, insbesondere aus einem Metall wie z. B. Kupfer gebildet. Das Heizelement 13 ist innerhalb des Gehäuses 11 stehend, angeordnet und erstreckt sich über einen Höhenbereich H. Das Heizelement 13 ist durch ein elektrisch und thermisch gut leitfähiges Material gebildet, wobei vorzugsweise Kunststoffe verwendet werden. Hierbei ist Kunststoffwiderstandsmaterial, aufgrund seiner Eigenschaften, besonders geeignet. Das Kunststoffwiderstandsmaterial ist aus einem Kunststoff, z. B. Polyamid, Polyphenylensulfid oder Polypropylen gebildet, wobei als Füllstoff elektrisch leitfähige Partikel, wie z. B. Metalle, Kohlefasern, Ruß, Graphit oder eine Kombination aus diesen Materialien beigemengt sind. Die Art und der Anteil des Füllstoffes kann nach dem gewünschten elektrischen Widerstand gewählt werden. Der Kunststoff behält sein spezifisches Gewicht und seine Festigkeit im Wesentlichen bei und kann auch durch kunststoffspezifische Verfahren, wie z. B. Spritzgießen verarbeitet werden. Die Oberfläche des Heizelementes 13 ist von einer dünnwandigen, elektrisch isolierenden Schicht 14 umgeben. Das Gehäuse 11 weist eine Gehäusewandung 15 auf, an welcher in einem tiefen Bereich eine Gehäuseöffnung 16 angeordnet ist. Die Kontaktstäbe 12a und 12b durchdringen einen Adapter 17, der in die Gehäuseöffnung 16 eingebracht ist und diese dichtend verschließt. Der Adapter 17 ist vorzugsweise aus einem Polymer hergestellt, das thermisch und elektrisch isolierende Eigenschaften aufweist. Zur Gewährleistung der Dichtheit der Gehäuseöffnung 16 können zwischen Adapter 17 und der Gehäusewandung 15 nicht dargestellte elastische Dichtmittel angeordnet werden. Die Dichtmittel können dabei axial bzw. in Montagerichtung oder auch umfangsseitig, am Adapter 17 bzw. Gehäuse 11 befestigt werden. Unterhalb des Adapters 17 ist eine Auswerteeinheit 18 angeordnet. Die Kontaktstäbe 12a, 12b erstrecken sich unterhalb des Adapters 17 bis in die Auswerteeinheit 18 und sind in dieser z. B. durch Löt-, Schraub- oder Steckverbindungen befestigt.

Auf der Auswerteeinheit 18 ist eine Schmelzsicherung 19 angeordnet, die als Überhitzungsschutz dient. Diese Schmelzsicherung 19 ist dabei über Verbindungselemente 20 mit dem Kontaktstab 12a und einem Schalttransistors 21 verbunden, wodurch sie thermisch mit der Widerstandsheizung gekoppelt ist. Die Verbindungselemente 20 können Steck-, Löt-, oder Schraubverbindungen sein. Die Schmelzsicherung 19 besteht aus einer Legierung mit einem niedrigen Schmelzpunkt. Durch die Schmelzsicherung 19 wird, unabhängig vom Stromfluss, eine Überhitzung der Widerstandsheizung verhindert, indem sie den Stromfluss unterbricht.

Der ebenfalls auf der Auswerteeinheit 18 angeordnete Schalttransistor 21 schaltet das Heizelement 13 gesteuert von einem Steuerimpuls, zu und ab, dies wird als Puls-Weiten-Modulation (PWM) bezeichnet. Der Schalttransistor 21 ist mit dem Kontaktstab 12a verbunden. Aufgrund dieser Verbindung kann die im Schalttransistor 21 entstehende Wärme über den Kontaktstab 12a in das Heizelement 13 abgeleitet werden.

Ein weiteres auf der Auswerteeinheit 18 angeordnetes elektronisches Bauteil 22, welches z. B. ein Mikroprozessor sein kann, dient zur Erfassung und Verarbeitung aller ermittelten Werte. Ein elektrischer Anschlußstecker 23 bildet eine korrespondierende Steckverbindung mit z. B. einer elektronischen Einheit und einer Spannungsversorgung (nicht dargestellt). Ein Temperatursensor 24 ist direkt und möglichst großflächig am Kontaktstab 12b befestigt, wodurch eine gute Wärmeübertragung auf den Temperatursensor 24 gewährleistet ist. Der Kontaktstab 12b ist mit dem Temperatursensor 24 thermisch verbunden, vorzugsweise verlötet. Bei anderen Ausgestaltungen kann die Befestigung z. B. unlösbar durch Kleben oder Nieten oder lösbar durch z. B. eine Steck- bzw. Schraubverbindung hergestellt sein.

Eine Kontaktplatte 25 bildet die elektrische Kontaktfläche mit der im Gehäuse 11 befindlichen Flüssigkeit, wobei die Kontaktplatte 25 ebenfalls mit der Auswerteeinheit 18 verbunden ist. Dadurch wird es möglich, von der Auswerteinheit 18 einen elektrischen Spannungsimpuls an die Flüssigkeit abzugeben und den Strom- und Spannungsverlauf ebenfalls über die Kontaktplatte 25 zu erfassen. Die Kontaktplatte 25 kann an mehreren Positionen angebracht werden und dabei z. B. in Stabform, als Blechstreifen, oder als Kabel ausgeführt werden. Im gezeigten Ausführungsbeispiel ist die Kontaktplatte 25 am Tiefpunkt des Gehäuses 11 angeordnet und durchdringt den Adapter 17. Die Kontaktplatte 25 kann jedoch ebenso an einem höheren Punkt angeordnet sein und separat im Gehäuse 11 positioniert werden. Die oben beschriebenen Funktionselemente der Auswerteeinheit 18 sind direkt oder indirekt auf einem Trägerkörper 26 angeordnet. Als Trägerkörper 26 für die Auswerteeinheit 18 eignet sich z. B. eine herkömmliche Kunststoffplatine. Der Trägerkörper 26 verfügt über eine Aussparung 27, welche der thermischen Entkopplung dient und die Wärmeüberleitung der vom Schalttransistor 21 ausgehenden Wärme auf den Temperatursensor 24 minimiert.

Innerhalb des Gehäuses 11 sind zwei Medien mit unterschiedlicher Dichte vorhanden, wobei sich das Medium mit der höheren Dichte im unteren Bereich des Gehäuses 11 absetzt und sich zwischen den Medien eine Phasengrenze 28 bildet. Im Fall eines Wasserabscheiders aus Dieselkraftstoff wird die Phasengrenze 28 von der Auswerteeinheit 18 erfasst. Übersteigt die Phasengrenze 28 einen definierten Grenzwert, so kann das Wasser über ein nicht dargestelltes Ablassventil aus dem Gehäuse 11 entfernt werden. Das Ablassventil kann z. B. auch im Adapter 17 angeordnet sein und von der Auswerteeinheit 18 angesteuert werden.

Figur 2 zeigt ausschnittsweise einen Randbereich der Widerstandsheizung 10. Dabei ist dieser Randbereich innerhalb des in Fig. 1 gezeigten Gehäuses 11 angeordnet. Das Heizelement 13 ist auf der einen Seite mit dem Kontaktstab 12 verbunden und auf der anderen Seite von der isolierenden Schicht 14 beschichtet. Zwischen der isolierender Schicht 14 und dem Heizelement 13 ist eine Oberflächenversiegelung 34 aus einer ausgehärteten, anorganischen, nichtmetallischen, insbesondere silikatischen Beschichtungslösung dargestellt. Diese Oberflächenversiegelung 34 versiegelt die Polymeroberfläche und verhindert somit ein eintreten von Fluiden.

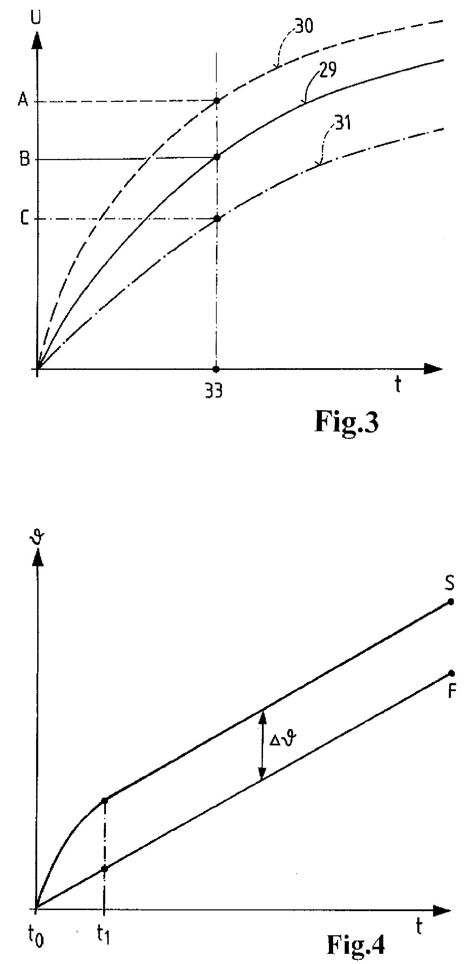

In Figur 3 sind die Spannungsverläufe der Füllstandsmessung bei verschiedenen Flüssigkeitspegelständen gezeigt. Dabei werden die Spannungsverläufe auf der Spannungsachse U über der Zeitachse t dargestellt. Die drei Kurven 29, 30, 31 zeigen den jeweiligen Spannungsverlauf bei drei unterschiedlichen Wasserpegelständen der zu messenden Flüssigkeit. In den Spannungsverläufen wird nach dem Zeitpunkt 33 die Messung durchgeführt. Die zum Zeitpunkt 33 erfassten Werte A, B und C lassen einen Rückschluss auf den Pegelstand der im Gehäuse 11 befindlichen Flüssigkeit zu. Ist ein hoher Wasseranteil im Gehäuse 11, so verläuft die Spannungskurve 31 bis zum Zeitpunkt 33 flach und es ergibt sich zum Zeitpunkt 33 der Wert C. Ist kein Wasser im Gehäuse 11, so verläuft die Spannungskurve 30 bis zum Zeitpunkt 33 steil und es ergibt sich der Wert A. Bei einem mittleren Wasserpegelstand ergibt sich die Spannungskurve 29 und der Wert B.

In Figur 4 wird eine Temperaturdifferenz Δ 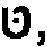 zwischen einer innerhalb des Gehäuses 11, (gemäß Figur 1) bestehenden Flüssigkeitstemperatur F und einer Sensortemperatur S dargestellt. Diese Temperaturdifferenz Δ 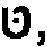 entsteht bei gleich bleibender Strömungsgeschwindigkeit und konstanter Heizleistung. Dabei wird die Temperatur 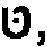 über der Zeit t dargestellt. Zu einem Einschaltzeitpunkt t0 ist die Sensortemperatur S gleich der Flüssigkeitstemperatur F. Zwischen dem Einschalten des Heizelementes zum Zeitpunkt t0 und einem Verzögerungszeitpunkt t1, erwärmt sich die Flüssigkeitstemperatur F, verzögert zur Sensortemperatur S. Ab dem Zeitpunkt t1 stellt sich zwischen Sensor S und Flüssigkeit F eine konstante Temperaturdifferenz Δ 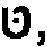 ein. Der Sensor kann dabei, wie der in Figur 1 gezeigte Temperatursensor 24, auch außerhalb des ebenfalls in der Figur 1 gezeigten Gehäuses 11 angeordnet sein. Aus dem am Sensor erfassten Temperaturwertwert S kann somit die Flüssigkeitstemperatur F errechnet werden, indem man von der Sensortemperatur S die Temperaturdifferenz Δ 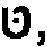 subtrahiert.

## Patentansprüche

1. Widerstandsheizung für ein Flüssigkeitssystem, insbesondere ein Kraftstoffsystem, aufweisend mindestens ein Heizelement (13), welches mit mindestens zwei Kontaktstäben (12a, 12b) verbunden ist, wobei an die Kontaktstäbe (12a, 12b) eine elektrische Spannung anlegbar ist, **dadurch gekennzeichnet, dass** ein Sensor vorgesehen ist mit welchem mindestens ein Parameter in dem Flüssigkeitssystem erfassbar ist, und wobei der Sensor (24) mit mindestens einer Auswerteeinheit (18) korrespondierend verbunden ist.

2. Widerstandsheizung nach Anspruch 1, **dadurch gekennzeichnet, dass** das Heizelement (13) eine Oberflächenversiegelung aufweist, welche aus Materialien auf anorganischer, nichtmetallischer, insbesondere silikatischer Basis gebildet ist.

3. Widerstandsheizung nach einem der vorhergehenden Ansprüche, **dadurch gekennzeichnet, dass** der Sensor (24) ein Temperatursensor ist.

4. Widerstandsheizung nach Anspruch 3, **dadurch gekennzeichnet, dass** der Temperatursensor (24) mit einem der Kontaktstäbe (12a, 12b) verbunden ist.

5. Widerstandsheizung nach Anspruch 3 oder 4, **dadurch gekennzeichnet, dass** ein Schalttransistor (21) vorgesehen ist, welcher thermisch mit einem der Kontaktstäbe (12a, 12b) verbunden ist, wodurch der Schalttransistor (21) kühlbar ist.

6. Widerstandsheizung nach einem der vorhergehenden Ansprüche, **dadurch gekennzeichnet, dass** der Sensor ein Füllstandssensor ist.

7. Widerstandsheizung nach Anspruch 6, **dadurch gekennzeichnet, dass** durch den Füllstandssensor die elektrische Kapazität der im Flüssigkeitssystem enthaltenen Flüssigkeit erfassbar ist.

8. Widerstandsheizung nach Anspruch 7, **dadurch gekennzeichnet, dass** das Heizelement (13) von einer elektrisch isolierenden Schicht (14) umgeben ist.

9. Flüssigkeitssystem insbesondere Kraftstoffsystem, aufweisend ein Gehäuse (11) mit einem Einlass und einem Auslass, **dadurch gekennzeichnet, dass** ein Adapter (17) an dem Gehäuse (11) angeordnet ist, wobei eine Widerstandsheizung (10) gemäß einem der vorhergehenden Ansprüche mit dem Adapter (17) verbunden ist.

10. Verfahren zum Erfassen eines Flüssigkeitspegels in einem Flüssigkeitsfiltersystem gemäß Anspruch 9, **dadurch gekennzeichnet, dass** in einem ersten Schritt zwischen der im Gehäuse (11) befindliche Flüssigkeit und dem Heizelement (13) ein elektrischer Spannungsimpuls angelegt wird, wobei in einem zweiten Schritt der Spannungsverlauf von der Auswerteeinheit erfasst wird, wobei in einem dritten Schritt der Spannungsverlauf von der Auswerteeinheit analysiert wird und **dadurch** ein Wert ausgegeben wird welcher eine Höhenangabe eines Flüssigkeitspegels darstellt.

11. Verfahren zum Erfassen der Temperatur in einem Flüssigkeitsfiltersystem gemäß Anspruch 9, **dadurch gekennzeichnet, dass** die Temperatur des Kontaktstabes (12b) von dem Sensor (24) erfasst und an die Auswerteeinheit (18) übermittelt wird, wobei die Heizleistung der Widerstandsheizung (10) an die Auswerteeinheit (18) übermittelt wird, wobei in der Auswerteeinheit (18) die Flüssigkeitstemperatur in Abhängigkeit von der Heizleistung und der Temperatur des Kontaktstabes (12b) bestimmt wird.
